# EUROPEAN PATENT SPECIFICATION

(11) **EP 1 707 049 B1**
(45) Date of publication and mention of the grant of the patent: **11.03.2009**
(21) Application number: 06075768.9
(22) Date of filing: 30.03.2006
(51) Int. Cl.: A01K 1/00

(54) **An animal related device for limiting the freedom of movement of an animal standing upright**
Tierbezogene Vorrichtung zum Einschränken der Bewegungsfreiheit eines aufrechtstehendenTieres
Appareil pour animaux à limiter la liberté de mouvement d'un animal restant debout

(30) Priority: 01.04.2005 NL 1028674
(43) Date of publication of application: 04.10.2006
(73) Proprietor: Lely Enterprises AG, 6300 ZUG (CH)
(72) Inventor: van den Berg, Karel, 2971 BR Bleskensgraaf (NL); Sie, Howard, 3037 VC Rotterdam (NL); Voogd, Lucien Eliza Niels, 4143 HG Leerdam (NL)
(74) Representative: Corten, Maurice Jean F.M.

(56) References cited:
- EP-A- 0 970 604
- FR-A- 1 479 411
- GB-A- 2 068 036
- NL-C1- 1 028 069
- NL-C2- 1 017 888
- US-A- 1 337 926
- US-A- 5 063 876

## Description

The invention relates to an animal related device for limiting the freedom of movement of an animal standing upright, according to the preamble of claim 1.

Such a device for limiting the freedom of movement of an animal standing upright is known from NL 1028069.

This document discloses a mobile feeding installation with a feed containing surface being present between two side walls. At the entrance side of the feed containing surface, the side walls acting as partition elements consist of frame portions between which tarpaulin is stretched as partition element portions.

Leaning by the animals against the hard frame portions of the partition element may lead to the occurrence of pressure places with the animals.

GB 2068036 discloses a livestock hurdle comprising a tensioned plastics-material web carried by a substantially rigid frame. The frame includes two uprights spaced by cross-bars.

It is an object of the invention to provide an animal related device for limiting the freedom of movement of an animal standing upright, which device does not have the aforementioned drawback.

To this end, the device mentioned in the preamble comprises the features of the characterizing part of claim 1. It has been demonstrated by experimental tests that the application of a partition element (portion) having the properties mentioned in the preamble of claim 1 in the area mentioned in the characterizing part of claim 1 leads to reduction or even obviation of pressure places and a considerably better resistance to wear of the partition element, owing to the fact that the mechanical loads exerted on the partition element are reduced.

In an embodiment of a device according to the invention, the partition element (portion) is suitable for deforming temporarily, under the influence of the produced moment, in such a way that, at least at the place where the animal is in contact with the partition element (portion), it will adapt itself to the contours of the relevant animal. The surface extension as a result of adaptation of the partition element (portion) to the contours of the animal leads to a lower pressure load relative to the situation in which the contours of the animal come into contact with a hard, rigid partition element (portion).

In an embodiment of a device according to the invention, the animal related device is suitable for supplying feed and/or drink to animals. Separating animals standing upright by means of partition elements takes place in particular in the current automatic feeding systems. An animal related feeding is now possible.

In an embodiment of a device according to the invention, the animal related device comprises at least two feed troughs that are disposed on a framework of the device, the framework being the fastening element. Besides application of the partition element connected with the framework and/or a partition element portion thereof for separating animals according to the invention with feeding and/or watering installations, application is also possible in milking systems, automatic milking systems, places for cattle in a stable, such as for example the known cubicle, or in any other situation in which animals have to be separated or guided (animal traffic).

In an embodiment of a device according to the invention, the framework is located around a central axis. Thus an efficient space utilization is achieved.

In an embodiment of a device according to the invention, the at least one partition element and/or a partition element portion thereof are/is disposed between two neighbouring feed troughs. In this way eating animals are prevented from being disturbed by other animals. This leads to a quiet eating behaviour and obviates stress. Essential is the maximum flexibility of the partition element present in the device, which has stress reducing effects both on a leaning animal and on the fastening points of the partition element. The animals are led by the partition element to the feeding place in an animal-friendly way. Moreover, a partition element causes the animals to stand in a substantially identical orientation relative to the feeding place, which makes it easier to supply feed in an animal related way, if desired.

In an embodiment of a device according to the invention, the partition element and/or a partition element portion thereof extend(s) at any rate at least substantially from the entrance side of a feed trough to the front legs of the animals to be separated. With feed troughs located on a framework around a central axis, separated by partition elements, this appears to be a suitable distance. With cows, upon application of hard, rigid partition elements, most pressure places occur in particular in the area that is designated as the point of shoulder area of the animal. As is known to the person skilled in the art, by the point of shoulder area is meant the area in the vicinity of the shoulder joint. (The point of shoulder area is the English translation of the Dutch word 'boeg'). In an embodiment of a device according to the invention, said suitable distance lies in the range between approximately 500 mm and approximately 800 mm. This distance appears to be a suitable distance in cow practice. A preferred distance amounts to approximately 700 mm. It is obvious that the distances are animal-dependent. With other animals than cows, the values can be chosen in such a way that the inventive idea comes out well.

According to the invention, the partition element comprises a first and a second element, the first element and the second element being connected with the fastening element and the first element being located at least substantially above the second element, and the partition element portion being stretched at least over a part of the length of the first and the second element between the first and the second element.

There may be taken into consideration a partition element with a length that is substantially equal to the length of the animals to be separated, with a flexible partition element portion being provided in the vicinity of the feed trough. Certainly in the case of partition elements around a centrally located device for supplying feed and/or drink to animals, the feeding places for the animals will taper between two partition elements. It is now important that at the place where the feeding place is narrowest, in the vicinity of a feed trough, the animal is able to make a sideward movement without experiencing the disadvantages of hard, rigid partition elements.

In an embodiment of a device according to the invention, the partition element comprises an upper portion, a lower portion, and a connecting portion between the upper and the lower portion, the upper portion being at least substantially located above the lower portion, and the partition element being connected with the fastening element via the connecting portion, and the upper portion and the lower portion each having a free end in the direction from the fastening element, and the partition element portion being stretched at least over a part of the length of the upper and the lower portion. The partition element, for example in a C-shape configuration, enables reduction of the number of separate components of the device. The (flexible) partition element portion can be stretched by one partition element.

According to the invention, over a part between the first and the second element, the partition element only comprises the partition element portion. The presence of rigid structural members of partition elements at the place where the (flexible) partition element portion is located would undo the advantages of the partition element portion. This also holds, of course, for an embodiment of a device according to the invention in which a part between the upper and the lower portion of the partition element only comprises the partition element portion.

In an embodiment of a device according to the invention, at least the first element is adjustable relative to the second element for stretching the partition element portion. Adjustability of at least the first element offers the possibility of stretching and, if desired, re-stretching after some time a (flexible) partition element portion between the first and the second element. It may also be taken into consideration to apply a canvas whose edges are provided with apertures for stretching the canvas with the aid of cords between the first and the second element.

In an embodiment of a device according to the invention, the part between the first and the second element or the part between the upper and the lower portion extends over a length of approximately 500 mm. It is essential that an animal, when moving sidewards, comes mainly into contact with the flexible partition element portion. With cows, it is mainly the point of shoulder area of the animal that has to be spared. The aforementioned length appears to be a suitable practice value indication for this purpose.

In an embodiment of a device according to the invention, the distance over which the partition element and/or a partition element portion thereof extend(s) at any rate at least substantially is at least equal to approximately the average length of the animals to be separated. The essence that an animal, when moving sidewards, comes mainly into contact with the flexible partition element portion can also be achieved in the aforementioned embodiment. Partial or complete flexibility can be incorporated in the embodiment of the device. There may be taken into consideration a pipe frame which is at least equal to approximately the average length of the animals to be separated, which has a properly chosen open character, and which comprises the flexible element in the vicinity of a feed trough at the place where contact between the point of shoulder area of an eating cow and the device is to be expected.

In an embodiment of a device according to the invention, the partition element portion has a tarpaulin-like character. All sorts of synthetic-like films, cloth-like fabrics, combinations of the aforementioned materials, etc. may be taken into consideration. These materials may be interwoven in different ways. As examples may be taken into consideration in this context: a canvas with an insert, woven material, net-like structures, material-technical sandwich constructions, etc. A substantially flexible partition element portion with a tarpaulin-like character is in particular favourable for reducing pressure places with an animal. A farmer will not replace a common, relatively hard partition element until it is completely defective and no longer able to fulfil the separating function. Tarpaulin is easy to replace and makes it possible to execute the entire outlined separation concept in a cheaper way than the commonly used, relatively hard partition elements. Consequently, upon application of a partition element comprising a tarpaulin or the like, a farmer will soon be inclined to replace the tarpaulin when damage has been established. In view of the fact that optimum stable hygiene is an important condition for keeping animals healthy, there is thus efficiently promoted an improvement in the prevention of accumulation of sources of infection for an animal on a partition element.

The invention will now be explained in further detail by way of example with reference to the accompanying drawings, in which:
Figure 1 is a cross-sectional view of an embodiment of a partition element according to the invention, included in a device for supplying feed and/or drink to animals, and
Figure 2 shows in more detail an embodiment of a partition element according to the invention comprising a partition element (portion) suitable for deforming temporarily, under the influence of a produced moment, in such a way that, at least at the place where the animal is in contact with the partition element (portion), it will adapt itself to the contours of the relevant animal.

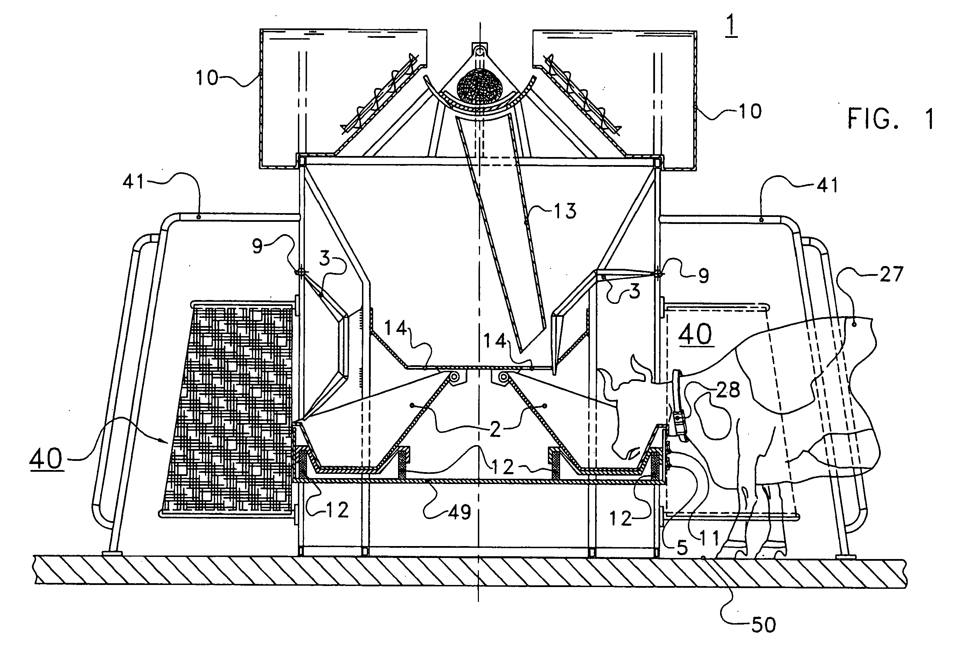

Figure 1 is a cross-sectional view of a device 1 for automatically supplying feed and/or drink to animals 27 with several feed troughs 2 disposed on a framework 49 located around a central axis, each comprising a flap 3 that is capable of being pushed away. Said device will be designated hereinafter as feeding system. In the figure, on the left, the flap 3 of a feed trough is depicted in the closed position; on the right, the flap 3 of another feed trough is shown in the opened position. In the opened position the flap 3 constitutes the rear and upper wall of the device 1. The dimensions of the feed trough 2 are so large that an animal 27 is able to root up the feed freely without feed falling off the edges and landing outside the feed trough 2. The feed trough 2 is provided with a weighing sensor 12. The feed trough 2 is filled at its rear side via the central feed distribution tube 13 of the feeding system. The aperture 14 between the rear wall of the feed trough 2 and the rear side of the flap 3 that is capable of being pushed away is sufficiently large for the supply of feed or drink. The rear wall of the feed trough 2 and the rear side of the flap 3 that is capable of being pushed away form together a funnel-shaped guide means for the feed and/or the drink. In the unlikely event of feed getting stuck between the rear side of the flap 3 and the feed trough 2, upon rotation of the flap 3 from the opened position into the closed position, the blocked feed will still get into the feed trough 2. Because of the large set-up of the entire device in the zone of the feed trough 2 there is a good ventilation. Air freshening in the vicinity of the head of, for example, a cow is important. The risk of condensation and consequently fungoid growth and caking of feed in the feed trough 2 is now minimized. An animal 27 is stimulated to eat by the now always freshly smelling feed. In this embodiment, the feeding system comprises several feed troughs 2 that are arranged circularly. The device 1 comprises per feed trough a light unit 11 serving as an indication device for an animal 27 in relation to preventing or giving access to the trough 2. Other indication means, such as, for example, a sound source, are possible as well. Each flap of the device 1 comprises a control unit (not shown) for controlling the flap 3, so that the flap 3 is capable of being put in an open position and in a closed position for giving the animal 27 access to the trough 2, respectively preventing the animal 27 from having access to the trough 2, and an identification device 5 for identifying the animal 27 and for emitting an identification signal that is indicative of the identified animal 27. The animal 27 wears an animal identification device 28 that is capable of communicating with an identification device 5 of the device 1. The control unit is provided with a memory, which memory is suitable for storing a first set of identification data in relation to animals 27 that are allowed to have access to the trough 2 and a second set of identification data in relation to animals 27 that are not allowed to have access to the trough 2. A comparing device, constituting part of the control unit, compares the identification signal of the animal 27 with the first and the second set of identification data in the memory, the situation being such that, if the identification signal belongs to the first set, the control unit always keeps the flap 3 in the open position or releases it from the closed position, and, if the identification signal belongs to the second set, the control unit keeps the flap 3 in the closed position or releases it from the open position for enabling it to assume the closed position. Based on the identification signal of the relevant animal 27, in case of an animal 27 that is eligible to eat, feed and/or drink are/is brought into the feed trough 2 by means of the central feed distribution tube 13 of the device 1. By means of calming light and/or sound signals in the immediate vicinity of the feed trough 2 during the time the animal 27 is eating, it is possible further to minimize stress in the animal's eating environment. The feed trough 2 and/or the device 1 may further be provided with a spraying installation (not shown) for (automatically) rinsing the feed trough 2. The device 1 is provided with separating units 41 extending from the device 1 over a distance that is at least equal to approximately half the average length of the animals 27 to be separated, for example cows. A separating unit 41 is preferably made of stainless steel, although other materials such as synthetic material may be applied as well. The separating units 41 effect a first rough separation between the animals.

In order to prevent that an animal 27 eating from a feed trough 2 is disturbed by another animal 27, the device according to the invention is applied. The partition element 40 extends from a feeding place 50. The partition element portion 44 of the partition element 40 extends at any rate at least substantially from the entrance side of a feed trough to the front legs of the animals 27 to be separated.

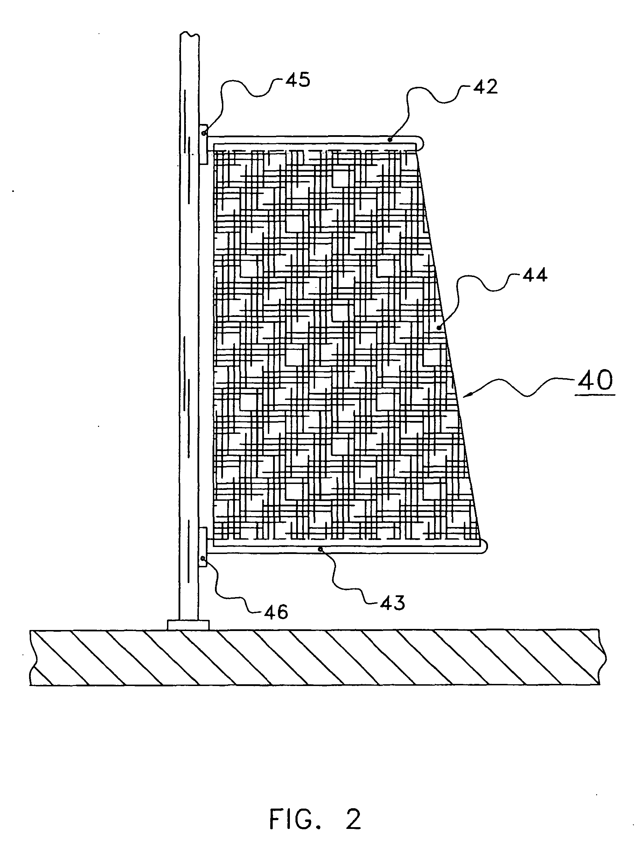

A more detailed view of a possible embodiment of a device with a partition element 40 according to the invention, comprising a flexible partition element portion 44 for separating animals in the device 1, is shown in Figure 2. The partition element 40 comprises a first 42 and a second element 43, the flexible partition element portion 44 being stretched between the first 42 and the second element 43. The first element 42 and the second element 43 can make part of one frame element (not shown). The flexible partition element portion 44 has a tarpaulin-like character. The presence of a flexible partition element portion, such as a tarpaulin 44, between the two elements 42 and 43 has the advantage that, when an animal 27 is leaning against it, the flexible partition element portion 44 will adapt itself to the contours of the animal 27. This prevents, in comparison with a partition element having a relatively harder, more rigid character, the occurrence of pressure places with the animal 27. The resilient, flexible partition element portion 44 offers both broad and narrow animals 27 an animal-friendly feeding place 50. Moreover, animals 27 eating side by side are now able to lean against each other. This meets the natural behaviour of the animals 27. This results in less stress with the animal 27 and, consequently, inter alia in a possibly better consumption of feed/drink. At least the first element 42 is adjustable for making it possible to stretch and/or re-stretch the flexible partition element portion 44. The flexible character of the flexible partition element portion 44 of the partition element 40 results, when said partition element 40 is loaded by a leaning animal 27, in a reduced loading effect on the fastening points 45, 46 of the first 42 and second element 43 of the partition element 40. The flexible partition element portion 44 is easy to replace and is very favourable from a cost-price-technical point of view. The at least one partition element 40 may be flexibly connected with the framework 49 of the feeding system. This still further enhances the animal-friendly character of the partition element 40, because the partition element is now very flexible relative to a leaning animal 27. In this context may be taken into consideration the application of spring constructions at the place of the fastening points 45, 46 of the device 1. The partition element 40 of the device is now resiliently connected with the framework 49 of the feeding system and allows some deflection of the device when an animal 27 is leaning.

## Claims

1. An animal related device (1) in which at least one partition element (40) for limiting the freedom of movement of an animal (27) standing upright is fitted to a fastening element, the at least one partition element (40) and/or a flexible partition element portion (44) thereof being, on the one hand, suitable for limiting at least the freedom of movement of the head of an animal (27) in such a way that the animal (27) is not able to put its head beyond the partition element (portion) and being, on the other hand, flexible and/or flexibly fitted in such a way that, under the influence of a moment produced by a force exerted by an animal (27) on said partition element (portion), they/it are/is suitable for deflecting and, when said moment decreases, for reassuming substantially the initial position, **characterized in that** said one partition element (40) and/or a partition element portion (44) thereof have/has these properties at least in an area comprising the horizontal projection of the point of shoulder area of the animal standing upright on the partition element (portion), **in that** the partition element (40) comprises a first (42) and a second element (43), the first element (42) and the second element (43) being connected with the fastening element and the first element (42) being located at least substantially above the second element (43), and **in that** the partition element portion (44) is stretched at least over a part of the length of the first (42) and the second element (43) between the first (42) and the second element (43), and **in that** over the part between the first (42) and the second element (43) the partition element (40) only comprises the partition element portion (44).

2. An animal related device (1) as claimed in claim 1, **characterized in that** the partition element (portion) is suitable for deforming, under the influence of the produced moment, temporarily in such a way that, at least at those points where the animal (27) is in contact with the partition element (portion), it will adapt itself to the contours of the relevant animal (27).

3. An animal related device (1) as claimed in claim 1 or 2, **characterized in that** the animal related device is suitable for supplying feed and/or drink to animals (27).

4. An animal related device (1) as claimed in claim 3, **characterized in that** the animal related device comprises at least two feed troughs (2) that are disposed on a framework (49) of the device, the framework being the fastening element.

5. An animal related device (1) as claimed in claim 3 or 4, **characterized in that** the framework (49) is located around a central axis.

6. An animal related device (1) as claimed in claim 4 or 5, **characterized in that** the at least one partition element (40) and/or a partition element portion (44) thereof are/is disposed between two neighbouring feed troughs (2).

7. An animal related device (1) as claimed in any one of the preceding claims, **characterized in that** the partition element (40) and/or a partition element portion (44) thereof extend(s) at any rate at least substantially from the entrance side of a feed trough to the front legs of the animals (27) to be separated.

8. An animal related device (1) as claimed in any one of the preceding claims, **characterized in that** the partition element (40) comprises an upper portion, a lower portion, and a connecting portion between the upper and the lower portion, the upper portion being at least substantially located above the lower portion, and the partition element (40) being connected with the fastening element via the connecting portion, and the upper portion and the lower portion each having a free end in the direction from the fastening element, and **in that** the partition element portion (44) is stretched at least over a part of the length of the upper and the lower portion.

9. An animal related device (1) as claimed in claim 8, **characterized in that** over the part between the upper and the lower portion the partition element (40) only comprises the partition element portion (44).

10. An animal related device (1) as claimed in any one of the preceding claims, **characterized in that** at least the first element (42) is adjustable relative to the second element (43) for stretching the partition element portion (44).

11. An animal related device (1) as claimed in any one of claims 1 to 10, **characterized in that** the part between the first (42) and the second element (43) or the part between the upper and the lower portion extends over a length of approximately 500 mm.

12. An animal related device (1) as claimed in claim 7, **characterized in that** the distance over which the partition element (40) and/or a partition element portion (44) thereof extend(s) lies in the range between approximately 500 mm and approximately 800 mm.

13. An animal related device (1) as claimed in claim 12, **characterized in that** the distance amounts preferably to approximately 700 mm.

14. An animal related device (1) as claimed in any one of claims 1 to 6, **characterized in that** the distance over which the partition element (40) and/or a partition element portion (44) thereof extend(s) at any rate at least substantially is at least equal to approximately the average length of the animals (27) to be separated.

15. An animal related device (1) as claimed in any one of the preceding claims, **characterized in that** the partition element portion (44) has a tarpaulin-like character.

## Patentansprüche

1. Tierbezogene Vorrichtung (1), in welcher wenigstens ein Trennungselement (40) zum Einschränken der Bewegungsfreiheit eines aufrecht stehenden Tieres (27) an einem Befestigungselement angebracht ist, wobei das wenigstens eine Trennungselement (40) und/oder ein biegsamer Trennungselementabschnitt (44) davon einerseits zum Einschränken der Bewegungsfreiheit zumindest des Kopfes des Tieres (27) auf solch eine Weise geeignet ist, dass das Tier (27) nicht in der Lage ist, seinen Kopf über das Trennungselement (den Trennungselementabschnitt) hinaus zu strecken, und andererseits auf solch eine Weise biegsam und/oder biegsam angebracht ist, dass unter dem Einfluss eines Moments, welches durch eine Kraft erzeugt wird, die von einem Tier (27) auf das Trennungselement (den Trennungselementabschnitt) ausgeübt wird, sie/es(er) zum Verbiegen geeignet sind/ist und, wenn das Moment abnimmt, zum Einnehmen im Wesentlichen der Ausgangsposition geeignet sind/ist, **dadurch gekennzeichnet, dass** das eine Trennungselement (40) und/oder ein Trennungselementabschnitt (44) davon diese Eigenschaften wenigstens in einem Bereich aufweisen/aufweist, welcher der horizontalen Projektion des Schulterbereichs eines aufrecht stehenden Tieres auf dem Trennungselement (Trennungselementabschnitt) entspricht, dass das Trennungselement (40) ein erstes (42) und ein zweites (43) Element umfasst, wobei das erste Element (42) und das zweite Element (43) mit dem Befestigungselement verbunden sind und wobei das erste Element (42) wenigstens im Wesentlichen über dem zweiten Element (43) angeordnet ist, und dass der Trennungselementabschnitt (44) wenigstens über einen Teil der Länge des ersten (42) und des zweiten (43) Elements zwischen dem ersten (42) und dem zweiten Element (43) erstreckt ist, und dass über den Teil zwischen dem ersten (42) und dem zweiten Element (43) das Trennungselement (40) nur den Trennungselementabschnitt (44) umfasst.

2. Vorrichtung (1) nach Anspruch 1,
**dadurch gekennzeichnet, dass** das Trennungselement (Trennungselementabschnitt) geeignet ist, sich unter dem Einfluss des erzeugten Moments vorübergehend derart zu verformen, dass es(er) an jenen Punkten, wo das Tier (27) sich in Kontakt mit dem Trennungselement (Trennungselementabschnitt) befindet, sich den Konturen des betroffenen Tieres (27) anpasst.

3. Vorrichtung (1) nach Anspruch 1 oder 2,
**dadurch gekennzeichnet, dass** die tierbezogene Vorrichtung geeignet ist, die Tiere (27) mit Futter und/oder Flüssigkeit zu versorgen.

4. Vorrichtung (1) nach Anspruch 3,
**dadurch gekennzeichnet, dass** die tierbezogene Vorrichtung wenigstens zwei Futtertröge (2) umfasst, welche in einem Rahmengestell (49) der Vorrichtung angeordnet sind, wobei das Rahmengestell das Befestigungselement ist.

5. Vorrichtung (1) nach Anspruch 3 oder 4,
**dadurch gekennzeichnet, dass** das Rahmengestell (49) um eine zentrale Achse angeordnet ist.

6. Vorrichtung (1) nach Anspruch 4 oder 5,
**dadurch gekennzeichnet, dass** das wenigstens eine Trennungselement (40) und/oder ein Trennungselementabschnitt (44) davon zwischen zwei benachbarten Futtertrögen (2) angeordnet sind/ist.

7. Vorrichtung (1) nach einem der vorhergehenden Ansprüche,
**dadurch gekennzeichnet, dass** sich das Trennungselement (40) und/oder ein Trennungselementabschnitt (44) davon in jedem Fall wenigstens im Wesentlichen von der Eingangsseite eines Futtertroges zu den Vorderbeinen der Tiere (27), die getrennt werden sollen, erstrecken/erstreckt.

8. Vorrichtung (1) nach einem der vorhergehenden Ansprüche,
**dadurch gekennzeichnet, dass** das Trennungselement (40) einen oberen Abschnitt, einen unteren Abschnitt und einen Verbindungsabschnitt zwischen dem oberen und dem unteren Abschnitt umfasst, wobei der obere Abschnitt wenigstens im Wesentlichen über dem unteren Abschnitt angeordnet ist und das Trennungselement (40) mit dem Befestigungselement mittels eines Verbindungsabschnitts verbunden ist und der obere Abschnitt und der untere Abschnitt jeder ein freies Ende in die Richtung vom Befestigungselement weg aufweisen, und dass der Trennungselementabschnitt (44) wenigstens über die Länge des oberen und des unteren Abschnitts erstreckt ist.

9. Vorrichtung (1) nach Anspruch 8,
**dadurch gekennzeichnet, dass** über dem Teil zwischen dem oberen und dem unteren Abschnitt das Trennungselement (40) nur den Trennungselementabschnitt (44) umfasst.

10. Vorrichtung (1) nach einem der vorhergehenden Ansprüche,
**dadurch gekennzeichnet, dass** wenigstens das erste Element (42) relativ zum zweiten Element (43) zum Ausstrecken des Trennungselementabschnitts (44) einstellbar ist.

11. Vorrichtung (1) nach einem der Ansprüche 1 bis 10,
**dadurch gekennzeichnet, dass** der Teil zwischen dem ersten (42) und dem zweiten Element (43) oder der Teil zwischen dem oberen und dem unteren Abschnitt sich über eine Länge von ungefähr 500 mm erstreckt.

12. Vorrichtung (1) nach Anspruch 7,
**dadurch gekennzeichnet, dass** die Entfernung, über die sich das Trennungselement (40) und/oder ein Trennungselementabschnitt (44) davon erstrecken/erstreckt, im Bereich zwischen ungefähr 500 mm und ungefähr 800 mm liegt.

13. Vorrichtung (1) nach Anspruch 12,
**dadurch gekennzeichnet, dass** die Entfernung vorzugsweise ungefähr 700 mm beträgt.

14. Vorrichtung (1) nach einem der Ansprüche 1 bis 6,
**dadurch gekennzeichnet, dass** die Entfernung, über die sich das Trennungselement (40) und/oder ein Trennungselementabschnitt (44) davon erstrecken/erstreckt, in jedem Fall wenigstens im Wesentlichen gleich bis ungefähr der durchschnittlichen Länge der zu trennenden Tiere (27) ist.

15. Vorrichtung (1) nach einem der vorhergehenden Ansprüche,
**dadurch gekennzeichnet, dass** der Trennungselementabschnitt (44) einen abdeckplanenartigen Charakter aufweist.

## Revendications

1. Dispositif connexe aux animaux (1) dans lequel au moins un élément de séparation (40) pour limiter la liberté de mouvement d'un animal (27) se tenant debout est installé sur un élément de fixation, ledit au moins un élément de séparation (40) et/ou une partie d'élément de séparation (44) de celui-ci étant, d'une part, approprié(e) pour limiter au moins la liberté de mouvement de la tête d'un animal (27) de telle manière que l'animal (27) ne soit pas capable de mettre sa tête au-delà de l'élément de séparation (la partie d'élément de séparation) et étant, d'autre part, flexible et/ou installé(e) de façon flexible de telle manière que, sous l'influence d'un moment produit par une force exercée par un animal (27) sur ledit élément de séparation (ladite partie d'élément de séparation), ils/il/elle sont/est approprié(e)(s) pour se défléchir et, lorsque ledit moment diminue, pour reprendre sensiblement la position initiale, **caractérisé en ce que** ledit élément de séparation (40) et/ou une dite partie d'élément de séparation (44) de celui-ci possèdent/possède ces propriétés au moins dans une zone comprenant la saillie horizontale du point de zone d'épaule de l'animal se tenant debout sur l'élément de séparation (la partie d'élément de séparation), **en ce que** l'élément de séparation (40) comprend un premier élément (42) et un second élément (43), le premier élément (42) et le second élément (43) étant reliés à l'élément de fixation et le premier élément (42) étant positionné au moins sensiblement au-dessus du second élément (43), et **en ce que** la partie d'élément de séparation (44) est étirée au moins sur une partie de la longueur du premier élément (42) et du second élément (43) entre le premier élément (42) et le second élément (43), et **en ce que** la partie d'élément de séparation (44) est étirée au moins sur une partie de la longueur du premier élément (42) et du second élément (43) entre le premier élément (42) et le second élément (43), et **en ce que**, sur la partie entre le premier élément (42) et le second élément (43), l'élément de séparation (40) comprend seulement la partie d'élément de séparation (44).

2. Dispositif connexe aux animaux (1) selon la revendication 1, **caractérisé en ce que** l'élément de séparation (la partie d'élément de séparation) est approprié pour se déformer, sous l'influence du moment produit, temporairement de telle manière que, au moins au niveau des points où l'animal (27) est en contact avec l'élément de séparation (la partie d'élément de séparation), il s'adaptera aux contours de l'animal en question (27).

3. Dispositif connexe aux animaux (1) selon l'une des revendications 1 ou 2, **caractérisé en ce que** le dispositif connexe aux animaux est approprié pour fournir à manger et/ou à boire aux animaux (27).

4. Dispositif connexe aux animaux (1) selon la revendication 3, **caractérisé en ce que** le dispositif connexe aux animaux comprend au moins deux auges (2) qui sont disposées sur une ossature (49) du dispositif, l'ossature étant l'élément de fixation.

5. Dispositif connexe aux animaux (1) selon l'une des revendications 3 ou 4, **caractérisé en ce que** l'ossature (49) est positionnée autour d'un axe central.

6. Dispositif connexe aux animaux (1) selon l'une des revendications 4 ou 5, **caractérisé en ce que** ledit au moins un élément de séparation (40) et/ou une partie d'élément de séparation (44) de celui-ci sont/est disposé(e)(s) entre deux auges voisines (2).

7. Dispositif connexe aux animaux (1) selon l'une quelconque des revendications précédentes, **caractérisé en ce que** l'élément de séparation (40) et/ou une partie d'élément de séparation (44) de celui-ci s'étend/s'étendent d'une manière ou d'une autre au moins sensiblement à partir du côté d'entrée d'une auge jusqu'aux pattes avant des animaux (27) destinés à être séparés.

8. Dispositif connexe aux animaux (1) selon l'une quelconque des revendications précédentes, **caractérisé en ce que** l'élément de séparation (40) comprend une partie supérieure, une partie inférieure, et une partie de liaison entre la partie supérieure et la partie inférieure, la partie supérieure étant au moins sensiblement positionnée au-dessus de la partie inférieure, et l'élément de séparation (40) étant relié à l'élément de fixation par l'intermédiaire de la partie de liaison, et la partie supérieure et la partie inférieure possédant chacune une extrémité libre dans la direction à partir de l'élément de fixation, et **en ce que** la partie d'élément de séparation (44) est étirée au moins sur une partie de la longueur de la partie supérieure et la partie inférieure.

9. Dispositif connexe aux animaux (1) selon la revendication 8, **caractérisé en ce que** sur la partie entre les parties supérieure et inférieure, l'élément de séparation (40) comprend seulement la partie d'élément de séparation (44).

10. Dispositif connexe aux animaux (1) selon l'une quelconque des revendications précédentes, **caractérisé en ce qu'**au moins le premier élément (42) est ajustable par rapport au deuxième élément (43) pour étirer la partie d'élément de séparation (44).

11. Dispositif connexe aux animaux (1) selon l'une quelconque des revendications 1 à 10, **caractérisé en ce que** la partie entre le premier élément (42) et le second élément (43) ou la partie entre la partie supérieure et la partie inférieure s'étend sur une longueur d'approximativement 500 mm.

12. Dispositif connexe aux animaux (1) selon la revendication 7, **caractérisé en ce que** la distance sur laquelle l'élément de séparation (40) et/ou une partie d'élément de séparation (44) de celui-ci s'étend/s'étendent se trouve dans la plage comprise entre approximativement 500 mm et approximativement 800 mm.

13. Dispositif connexe aux animaux (1) selon la revendication 12, **caractérisé en ce que** ladite distance s'élève de préférence approximativement à 700 mm.

14. Dispositif connexe aux animaux (1) selon l'une quelconque des revendications 1 à 6, **caractérisé en ce que** la distance sur laquelle l'élément de séparation (40) et/ou une partie d'élément de séparation (44) de celui-ci s'étend/s'étendent d'une manière ou d'une autre est au moins sensiblement égale à approximativement la longueur moyenne des animaux (27) destinés à être séparés.

15. Dispositif connexe aux animaux (1) selon l'une quelconque des revendications précédentes, **caractérisé en ce que** la partie d'élément de séparation (44) possède un caractère similaire à de la bâche.
